# EUROPÄISCHE PATENTSCHRIFT

(11) **EP 1 369 626 B1**
(45) Veröffentlichungstag und Bekanntmachung des Hinweises auf die Patenterteilung: **30.08.2006**
(21) Anmeldenummer: 03090170.6
(22) Anmeldetag: 05.06.2003
(51) Int. Cl.: F16J 9/20, F16J 9/06

(54) **Dichtelement**
Sealing element
Elément d'étanchéité

(30) Priorität: 05.06.2002 DE 10225460
(43) Veröffentlichungstag der Anmeldung: 10.12.2003
(73) Patentinhaber: Dana GmbH, 89233 Neu-Ulm (DE)
(72) Erfinder: Christ, Burkard A., 82515 Wolfratshausen (DE); Tomas, Gert-Andreas, 65549 Limburg (DE)
(74) Vertreter: Pfenning, Meinig & Partner GbR

(56) Entgegenhaltungen:
- DE-B- 1 232 420
- DE-C- 642 606
- GB-A- 1 123 332

## Beschreibung

Die vorliegenden Erfindung betrifft ein Dichtelement insbesondere zur Verwendung als Kolbenringdichtung in Verbrennungskraftmotoren.

Ringförmige Dichtelemente aus metallischen Werkstoffen, z.B. Kolbenringe, sind an sich bekannt. Sie sind meist in einer ringförmigen Ausnehmung bzw. Nut aufgenommen, welche um einen Außenumfang eines Kolbens angeordnet ist. Der Kolben seinerseits ist in einem Zylinder hin- und hergehend bewegbar. Der Kolben komprimiert Fluide, wie z.B. entzündliche Gase in dem Zylinder, bei Entzündung der Fluide wird der Kolben von der Zündstelle weggedrückt. Dem Kolbenring kommt hierbei die Aufgabe zu, den Ringraum zwischen dem sich bewegenden Kolben und der umgebenden Zylinderwand möglichst gut abzudichten, um so z.B. Kompressionsverluste zu verringern und auch die Funktion des Ölabstreifens zu übernehmen.

Diese Aufgabe wird besonders gut durch profilierte Kolbenringe in der sogenannten "U-Flex"-Bauform sichergestellt. Diese weisen in radialer Richtung eine U-förmige Querschnittsform auf. An den beiden Schenkelenden des "U" sind jeweils Dichtlippen ausgeführt, welche einen dichtenden Kontakt mit der umgebenden Zylinderwand halten.

Kolbenringe in dieser "U-Flex"-Bauform weisen einen Schlitz auf, um diese in einer Nut des Kolbens positionieren zu können. Außerdem weisen sie z.B. über den Umfang verteilt Schlitze auf, um somit die Elastizitätseigenschaften des Ringes in radialer Richtung zu verbessern und einen gleichmäßigen Anpressdruck auf der vollen Umfangslänge auf die umgebende Zylinderwand zu ermöglichen. Hierdurch ist es möglich, den Ölverlust in dem Verbrennungskraftmotor gering halten zu können, diese Bauform bietet sich insbesondere für hochverdichtende Dieselmotoren oder auch für Rennsportmotoren an.

Aufgrund der über den Umfang verteilten Schlitze ist die Torsionssteifigkeit des Ringes entlang seiner Umfangsachse jedoch nicht sehr hoch. Dies führt zu dem Problem, dass bei auf dem Kolben montiertem Ring dieser beim Einführen in den Zylinder eine herausstehende "Ecke" aufweist, welche beim Einführen in den Zylinder unter Umständen deformiert wird und somit zu einer Fehlfunktion des Kolbens bzw. sogar zum Ausfall des ganzen Motors führen kann. Zur Stützung während dieses Vorgangs ist daher bekannt, Federelemente vorzusehen, welche in der Aushöhlung des "U" positioniert werden und somit eine Stützfunktion erfüllen, um den Kolbenring in der richtigen Lage zu halten. Als Federelemente sind jedoch bislang nur Spiralfedern bekannt. Diese weisen allerdings den Nachteil auf, dass sie bei genauer Anpassung an die U-Flex-Form nur sehr kostenaufwendig herstellbar sind. Ein derartiges Dichtelement ist zum Beispiel aus GB-A-1123332 bekannt.

Der vorliegenden Erfindung liegt daher die Aufgabe zugrunde, eine Dichtelement zu schaffen, welches einerseits die guten Ölabstreif- bzw. Dichteigenschaften bekannter "U-Flex"-Bauformen aufweist und darüber hinaus aber kostengünstig herstellbar ist und vor allem die oben genannten Montageprobleme (mit den hohen Folgekosten) vermeiden hilft.

Diese Aufgabe wird durch ein Dichtelement nach Patentanspruch 1 gelöst.

Dadurch, dass das Federelement als im wesentlichen nur in einer Raumrichtung gekrümmtes bogenförmiges Element ausgeführt ist, welches sich über sich über einen Umfangsbereich von mehr als 360° im Einbauzustand des Dichtrings erstreckt, wird einerseits der Dichtring hoher Güte in seiner z.B. "U-Flex"-Form beibehalten und andererseits ein sehr kostengünstiges Federelement bereitgestellt. Hierdurch wird gesichert, dass beim Einführen des Kolbens mit aufgesetztem z.B. "U-Flex"-Ring dieser Ring sich nicht beim Einführen in die Zylinderbuchse verkantet und dadurch beschädigt wird.

Das Federelement muss nicht als Spiralfeder ausgestaltet sein, es reicht ein entsprechend gebogenes linienförmiges Element wie z.B. ein Draht. Dieser ist sehr viel leichter herstellbar und auch in Länge bzw. Durchmesser leicht variierbar unter Einsatz sehr einfacher Werkzeuge. Hierbei erfüllt das erfindungsgemäße Federelement ebensogut die Aufgabe des Stützens bei der Montage, weil auch diese dafür sorgt, dass der Ring nicht aufgrund seiner fehlenden Eigenstabilität sich verwindet und somit nicht montierbar ist.

Es wird also somit ein bogenförmiges Element gleichbleibenden Querschnittes (und nicht variierenden Querschnittes, wie bei einer Spiralfeder) bereitgestellt. Das erfindungsgemäße Federelement erhält also quasi allein durch "Umfangsbiegung", z.B. eines Drahtes, seine endgültige Form, ein zusätzlicher Umformvorgang, z.B. zur Herstellung einer Raumform in Umfangsrichtung, wie dies bei einer Spiralfederform der Fall ist, ist nicht nötig.

Das Federelement hat hierbei so auf die Aufnahme des Dichtringes abgestimmt zu sein, dass es z.B. einen leichten Druck auf den Dichtring ausübt, so dass dieser leicht radial komprimiert wird. Diese Montagevorspannung ist jedoch gering im Vergleich zu der Anpresskraft bzw. dem Anpressdruck des Dichtringes auf die außen liegende Zylinderwand. Die Vorspannungskraft des Federelementes beträgt maximal 10 - 20 % der von dem Dichtring auf die Zylinderwand aufzubringenden Anpresskraft.

Bei einem erfindungsgemäßen Dichtelement mit einem Federelement und einem Dichtring mit einer Aufnahme für das Federelement zur Stützung des Dichtrings, wobei das Federelement als im wesentlichen nur in einer Raumrichtung gekrümmtes bogenförmiges Element ausgeführt ist, welches sich über einen Umfangsbereich von mehr als 360° im Einbauzustand des Dichtrings erstreckt, werden insbesondere bei der Montage Vorteile erreicht.

Dies ist von besonders großem Vorteil bei Dichtringen, welche einen "U"-förmigen Querschnitt haben, in welchem das Federelement unterbringbar ist. Diese Dichtringe sind aufgrund ihrer leichten Verdrillbarkeit sehr instabil, wenn sie nicht zusätzlich gestützt werden. Zur Montage bietet es sich daher an, hier entsprechende Stützvorrichtungen vorzusehen. Es ist hierbei jedoch sehr wichtig, dass die axiale Stützkraft stets bereitgehalten wird.

Dadurch, dass sich im Einbauzustand des Dichtrings das Federelement über einen Umfangsbereich von mehr als 360° des Dichtrings erstreckt, wird dies allerdings erreicht. Unter "Einbauzustand" ist hierbei der Zustand zu verstehen, bei welchem der Innenradius des Dichtrings im wesentlichen kreisrund ist. Es ist dies die Lage, bei welcher der Dichtring in einer Kolbennut untergebracht ist und in einen Zylinder eingebracht wird. Zum Einbau des Dichtringes wird der Dichtring in seinem Durchmesser aufgedehnt, wobei sich auch das Federelement aufdehnt. Der vergrößerte Umfangsbereich >360° ist hierbei so zu wählen, dass selbst beim Aufdehnen über den Kolben in der Aufdehnphase stets eine Überlappung des Federelementes im Stoßbereich gegeben ist, so dass es hier nicht zu einem Verhaken beider Enden bzw. einem dauerhaften Aufdehnen durch Abstützen dieser beiden Enden aufeinander kommen kann. Hierdurch könnte es zu einem Überragen des Federelements über den Außendurchmesser des Dichtringes kommen, welcher in einer Beschädigung der Zylinderwand bzw. des Dichtringes resultieren könnte. Die Überlappung ist hierbei jedoch stets so zu wählen, dass in diesem überlappenden Bereich kein Herausragen des Federelementes über den Außenradius des "U" des Dichtrings gegeben ist. Hierbei können die überlappenden Enden bezüglich des radialen Mittelpunktes des Dichtringes gleich weit entfernt sein (dann liegen sie quasi an der "Unterseite" des "U" des Dichtelementes nebeneinander oder sie können auch diagonal versetzt sein, so dass die Querschnitte jeweils unterschiedliche Abstände zum radialen Mittelpunkt des Dichtringes haben. In jedem Falle sind jedoch der Innenraum des "U" sowie die Drahtdurchmesser so zu wählen, dass auch im Überlappbereich kein Herausragen des Federelements über den Außendurchmesser des Dichtrings gegeben ist. Diese überlappende Bauweise des Federelementes hat den Vorteil, dass insbesondere bei geschlitzten Dichtringen nicht darauf geachtet werden muss, in welcher Lage das Federelement angeordnet ist (dieses sollte ja den Spalt überbrücken, so dass es zu keiner ungewollten Torsion kommt). Bei der erfindungsgemäßen Überlappung (d.h. Umfangsbereich >360° selbst in der Einbaulage, welche regelmäßig den kleinsten Durchmesser darstellt) ist dies aber ausgeschlossen. Es empfiehlt sich also stets so auszulegen, dass mehr als 360° im Einbauzustand bezüglich des Dichtrings gegeben sind seitens des Federelementes. Vorzugsweise sind dies (je nach Tiefe der Kolbennut) auch mehr als 380°, besonders vorzugsweise mehr als 400° und in Einzelfällen auch über 450°.

Vorteilhafte Weiterbildungen der vorliegenden Erfindung werden in den abhängigen Ansprüchen angegeben.

Eine vorteilhafte Weiterbildung sieht vor, dass das Federelement aus einem linienförmigen Ausgangsmaterial beliebigen Querschnittes herstellbar ist. Es kommen hier z.B. runde, rechteckige oder kreuzförmige Querschnitte in Betracht. Möglich ist auch ein in sich gewundender linienförmiger Draht, da auch dieser lediglich in eine Raumrichtung gekrümmt sein muss, um die erfindungsgemäße, leicht herstellbare Form zu erhalten.

Bei rundem Querschnitt weist das Federelement einen Durchmesser zwischen 0,3 mm und 3 mm, vorzugsweise zwischen 0,7 und 2 mm auf. Bei Querschnitten, welche nicht rund sind, sollen die Querschnittsflächen diesen Angaben entsprechend sein. Grundsätzlich hängt der Durchmesser des Federelementes ab vom vorgegebenen Außendurchmesser des Dichtrings in Abstimmung auf den abzudichtenden Zylinder sowie vom Material des Federelementes.

Das Federelement kann hierbei verschiedene Längen im Verhältnis zu dem Dichtring aufweisen. So kann es sich vorzugsweise in einem Umfangsbereich zwischen 200 Grad und 450 Grad im Einbauzustand des Dichtrings, d.h. in der auf dem Kolben montierten Lage erstrecken. Dies heißt, dass sowohl eine "positive" Überlappung (mehr als 360 Grad) und eine "negative" Überlappung (gleich oder weniger als 360 Grad) möglich ist. Durch größere Überlappbereiche wird eine noch bessere Stützung ermöglicht, bei kleineren Überlappbereichen ist weniger Materialeinsatz vonnöten, die Montage des Federelementes ist auch einfacher, wobei darauf zu achten ist, dass bei negativer Überlappung trotzdem das Federelement den Bereich des Spalts des Dichtrings überbrückt und das Federelement sich von selbst auf dem Dichtring hält.

Selbstverständlich ist es auch möglich, statt eines Federelementes innerhalb der Aufnahme des Dichtringes auch mehrere Federelemente gleichzeitig vorzusehen, welche z.B. über den Umfang des Dichtringes verteilt sind.

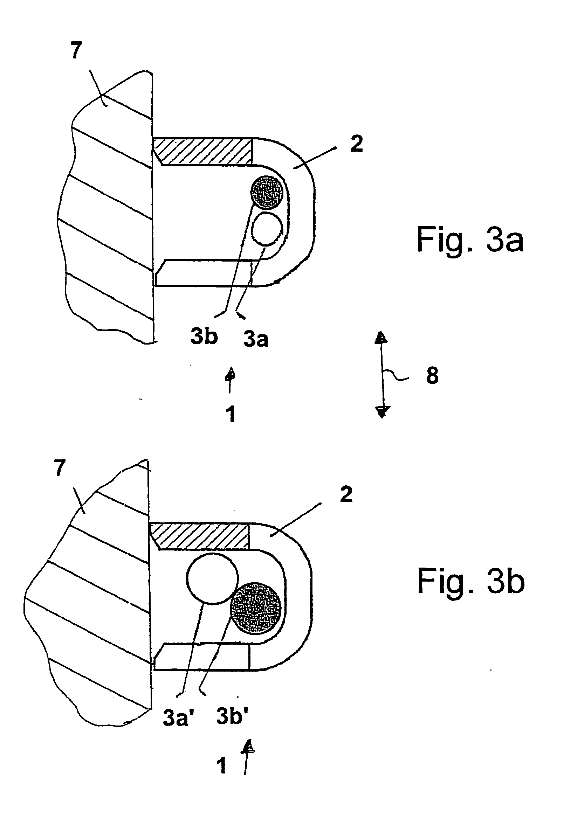

Eine weitere vorteilhafte Weiterbildung sieht vor, dass in einem Überlappbereich zweier Abschnitte des Federelementes die sich überlappenden Abschnitte bezüglich einer den Dichtring umschließenden Zylinderwand denselben Abstand haben (siehe Fig. 3a) oder gegeneinander versetzt sind (siehe Fig. 3b). Dies hängt z.B. davon ab, wie groß der Innenraum des "U" im Verhältnis zum z.B. Drahtdurchmesser des Federelementes ist. Bei verhältnismäßig kleinen Drahtdurchmessern können die Abschnitte des Federelementes nebeneinanderliegend auf der Grundfläche des "U" angeordnet sein, bei relativ großen Drahtdurchmessern ergibt sich eine versetzte Form, da nicht beide Abschnitte nebeneinander und somit parallel zu einer Zylinderwand eines den Kolben umgebenden Zylinders angeordnet werden können. Es sei darauf hingewiesen, dass auch bei diesen Überlappungen mit Versetzungen der sich überlappenden Abschnitte immer noch das Merkmal gegeben ist, dass das Federelement ursprünglich (also vor der Einbaulage) in einer Raumrichtung gekrümmt werden muss, der sich während des Einbaus zwangsläufig ergebende Versatz stellt hierzu keine Veränderung dar.

Eine besonders vorteilhafte Weiterbildung sieht vor, dass das Federelement an seinen Enden eine stärkere Krümmung aufweist als in den übrigen Bereichen. Besonders vorteilhaft ist es, das Federelement in der ebenen Projektion als "Omega" auszubilden. Dies heißt, dass die jeweiligen Enden des Federelementes voneinander abstehend angeordnet sind, hierdurch wird ein Verhaken der Enden vermieden.

Prinzipiell kann das erfindungsgemäße Federelement auch aus einem metallischen Werkstoff, wie z.B. Stahl sein oder aus einem Kunststoff. Wichtig ist lediglich, dass das Material elastisch und kostengünstig verfügbar sowie leicht umformbar ist. Es bietet sich für extreme Hochleistungsmotoren z.B. auch an, dass bogenförmige Element aus einem rückstandsfrei verbrennbaren Material herzustellen. Der Ring mit seiner Stützwirkung ist nämlich nur während des Montagevorgangs notwendig, durch ein späteres Verbrennen des Ringes wird die bewegte Masse des Kolbens und somit die Effizienz des Verbrennungsmotors weiter verbessert.

Wie bereits einleitend ausgeführt bietet sich das erfindungsgemäße Federelement insbesondere bei einem Dichtring an, welcher im Querschnitt eine U-Form hat und über den Umfang verteilt Schlitze sowie einen radialen Spalt zur leichteren Aufdehnung des Dichtringes auf eine Kolbennut etc. aufweist. Der Außendurchmesser des Dichtrings kann hierbei unterschiedlich groß sein. Er ist für beliebige Pkw- sowie Lkw- bzw. Flug- oder Schiffsmotoren herstellbar, deren Zylinderdurchmesser zwischen 20 und 200 mm, vorzugsweise zwischen 60 und 140 mm beträgt.

Weitere vorteilhafte Weiterbildungen werden in den übrigen abhängigen Ansprüchen angegeben.

Die vorliegende Erfindung wird nun anhand mehrerer Figuren erläutert. Es zeigen:
- Figur 1: ein erfindungsgemäßes Dichtelement im Einbauzustand;
- Figur 2a bis 2c: verschiedene Ansichten eines erfindungsgemäßen Dichtringes;
- Figuren 3a und 3b: Details eines erfindungsgemäßen Dichtelementes.

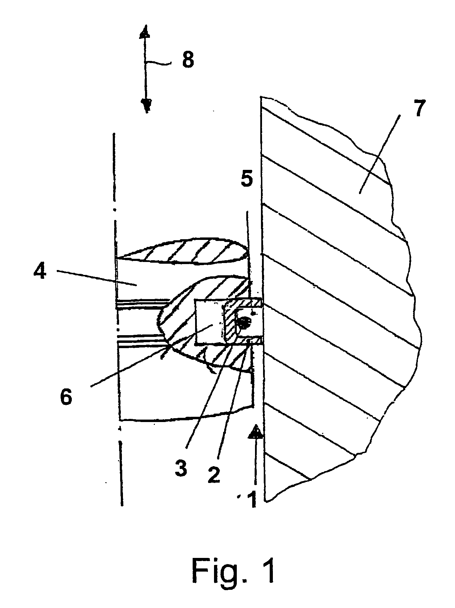

Figur 1 zeigt ein erfindungsgemäßes Dichtelement 1 im Einbauzustand. Dieses zeigt einen Dichtring 2, welcher in einer Nut 6 eines Kolbens 4 untergebracht ist. Der Kolben 4 ist in Richtung 8 oszillierend bewegbar, zwei übereinander liegende Dichtlippen 9 des Dichtringes 2 werden durch die Eigenelastizität des Dichtrings 2 gegen eine um den Kolben herum angeordnete Zylinderwand 7 gepresst zur Abdichtung des Spaltraumes zwischen Kolben und Zylinderwand.

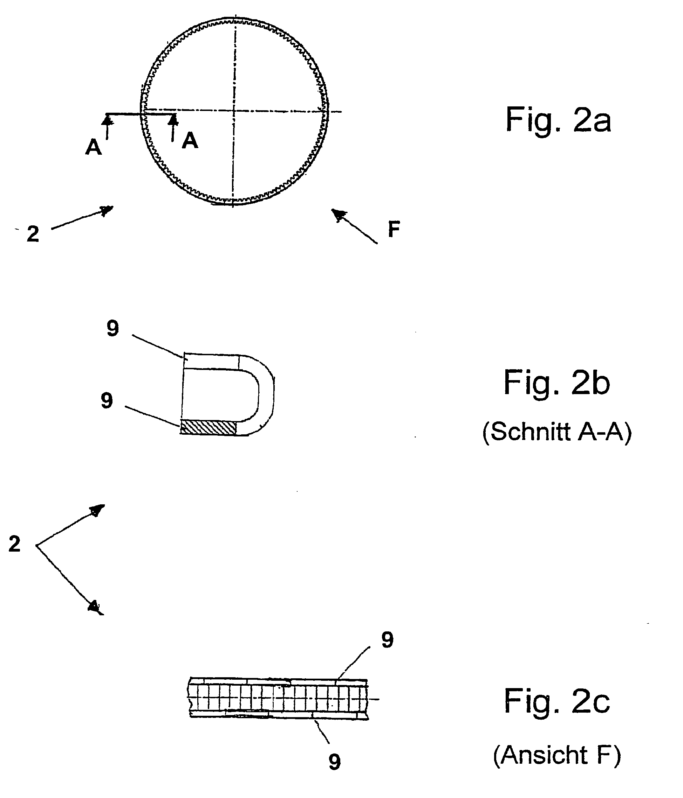

Der Dichtring 2 weist auf seiner radialen Innenseite eine im wesentlichen umlaufende Aufnahme 5 für ein Federelement auf. Der Dichtring 2 hat somit einen "U"-förmigen Querschnitt. Es handelt sich hierbei um eine sogenannte "U-Flex"-Bauform, wie sie einleitend beschrieben worden ist; zur leichteren Erkennbarkeit der U-Form ist diese in Figur 1 durchgehend schraffiert. Nähere Einzelheiten zur genauen Ausgestaltung des U-Flex-Dichtringes werden z.B. in Figur 2a bis 3b gegeben.

Der Dichtring 2 weist aufgrund von über seinen Umfang verteilten Schlitzen bzw. Querschnittsschwächungen eine in Umfangsrichtung sehr geringe Torsionssteifigkeit auf. Diese fehlende Torsionssteifigkeit ist bei der Montage des Dichtrings 2 von Nachteil, da der Dichtring bei der Montage in der Nut 6 des Kolbens 4 nicht von selbst seine Ringform beibehält. Daher ist zur Stützung bei der Montage ein Federelement vorgesehen, welches in Figur 1 mit dem Bezugszeichen 3 bezeichnet ist. Es handelt sich hierbei um einen Draht aus Stahl mit einem runden Querschnitt. Das Federelement 3 ist im wesentlichen nur in einer Raumrichtung (d.h. entlang des Umfangs der Aufnahme 5) gekrümmt und zumindest über einen Teil des Umfangs des Dichtrings 2 in der Aufnahme 5 zur Stützung des Dichtrings bei dessen Montage angeordnet. Die Ausdehnung des Dichtrings 2 in Richtung 8 beträgt vorliegend 2,5 mm. Der Durchmesser des Federelementes 3 beträgt hierbei 1,0 mm, als Material ist Stahl gewählt worden.

Selbstverständlich sind jedoch auch andere Querschnittsformen (rechteckige, z.B. vierkantige oder auch kreuzförmige oder ovale Formen) möglich. Der Drahtdurchmesser richtet sich hierbei nach den gewählten Materialien und vor allem nach dem Umfang des Dichtringes 2, bei rundem Querschnitt ist dies zwischen 0,3 und 3 mm, vorzugsweise zwischen 0,7 und 2 mm. Der Dichtring kann selbstverständlich aber auch aus anderen Materialien als Stahl gewählt sein. Hier kommen quasi beliebige metallische Werkstoffe oder auch Kunststoffe in Betracht (siehe oben). Im gegebenen Beispiel hat der Dichtring 2 in seiner Einbaulage einen Außendurchmesser von 70 mm. Es sind jedoch, wie bereits oben ausgeführt, auch andere Außendurchmesser möglich zwischen 20 und 200 mm, vorzugsweise zwischen 60 und 140 mm.

Das Federelement 3, welches in der Aufnahme 5 in Figur 1 im wesentlichen umlaufend und rund gelagert ist, weist an seinen Enden eine stärkere Krümmung auf als in den übrigen Bereichen (d.h. in den Bereichen, in denen eine dem Dichtring in der Einbaulage entsprechende runde Krümmung gegeben ist). Diese "Omega-Form" bietet den Vorteil, dass ein Verhaken der Enden vermieden wird.

Im folgenden soll kurz auf den in Figuren 2a bis 2c gezeigten Dichtring 2 eingegangen werden.

In Figur 2a ist eine Draufsicht gezeigt, welche zeigt, dass im Bereich des radialen Innenrandes des Dichtrings 2 eine zahnartige Struktur gegeben ist. Durch diese Querschnittsschwächung wird erreicht, dass abgestreiftes Öl durch entsprechende Drainageöffnungen im Kolben in das Kurbelgehäuse abfließen kann. Der Dichtring weist den Vorteil auf, dass umlaufend eine gute Anpressung an eine umliegende Zylinderwand 7 gegeben ist und somit eine gute Abstreifwirkung bzw. Abdichtung im Ringraum zwischen Kolben 4 und Zylinderwand 7 erreicht wird.

Figur 2b zeigt einen Schnitt durch den Dichtring nach Figur 2a gemäß A-A. Hier ist zu sehen, dass es sich hierbei um einen "U-Flex"-Dichtring handelt. Die Schenkel des "U" stellen hierbei Dichtlippen 9 dar.

Figur 2c zeigt eine Ansicht F des Dichtrings 2 aus Figur 2a. Hier ist zu sehen, wie mehrere beabstandete Spalte über den Umfang des Dichtrings 2 verteilt angeordnet sind.

Es handelt sich somit bei dem in Figuren 2a bis 2c gezeigten Dichtring 2 um einen solchen, welcher im Querschnitt eine "U"-Form hat und über den Umfang verteilte Schlitze sowie einen radialen Spalt zur leichteren Aufdehnung und Montage des Dichtrings auf einer Kolbennut 6.

Figuren 3a und 3b zeigen weitere Detailschnitte eines Dichtrings 2 mit eingelegtem Federelement 3.

In beiden Ausführungsformen ist das Federelement 3 länger als ein Umfang des Dichtelementes 2 im eingebauten Zustand. D.h., dass sich Abschnitte des Federelementes 3 jeweils in einem Teilbereich des Umfangs überlappen.

Prinzipiell ist jedoch auch eine oben beschriebene "negative" Überlappung möglich, bezüglich der Details wird auf die Beschreibungseinleitung verwiesen.

In Figur 3a sind der Abschnitt 3a sowie der Abschnitt 3b desselben Federelementes 3 im Überlappbereich übereinander angeordnet. Die Gesamthöhe des Dichtrings beträgt in Richtung 8 hierbei 2,5 mm, die Drahtdurchmesser jeweils 0,7 mm. Dies führt dazu, dass bei der gezeigten "U"-Form die Drahtabschnitte 3a und 3b beide parallel zur Zylinderwand 7 angeordnet sind.

Im Gegensatz hierzu ist in Figur 3b eine Anordnung gezeigt, bei welcher wiederum die Dichtringhöhe in Richtung 8 2,5 mm beträgt, der Drahtdurchmesser der Abschnitte 3a' und 3b' jedoch 1 mm. Hierdurch kommt es dazu, dass die Abschnitte 3a' und 3b' bezüglich der Zylinderwand 7 nicht denselben Abstand aufweisen.

## Patentansprüche

1. Dichtelement (1) mit einem Federelement (3) und einem Dichtring (2) mit einer Aufnahme (5) für das Federelement zur Stützung des Dichtrings, **dadurch gekennzeichnet, dass** das Federelement als im wesentlichen nur in einer Raumrichtung gekrümmtes bogenförmiges Element ausgeführt ist, welches sich über einen Umfangsbereich von mehr als 360° im Einbauzustand des Dichtrings (2) erstreckt.

2. Dichtelement nach Anspruch 1, **dadurch gekennzeichnet, dass** das Federelement (3) im Querschnitt rund, rechteckig oder kreuzförmig oder oval ist.

3. Dichtelement nach einem der vorhergehenden Ansprüche, **dadurch gekennzeichnet, dass** das Federelement (3) bei rundem Querschnitt einen Durchmesser zwischen 0,3 mm und 3 mm, vorzugsweise zwischen 0,7 mm und 2 mm, aufweist und bei anderen Drahtquerschnitten entsprechende Querschnittsflächen aufweist.

4. Dichtelement nach einem der vorhergehenden Ansprüche, **dadurch gekennzeichnet, dass** das Federelement (3) sich über einen Umfangsbereich bis zu 450 Grad im Einbauzustand des Dichtringes (2) erstreckt.

5. Dichtelement nach einem der vorhergehenden Ansprüche, **dadurch gekennzeichnet, dass** in einem Überlappbereich zweier Abschnitte des Federelements (3a, 3b); 3a', 3b') die sich überlappenden Abschnitte bezüglich einer den Dichtring (2) umschließenden Zylinderwand (7) denselben Abstand haben (Fig. 3a) oder gegeneinander versetzt sind (siehe Fig. 3b).

6. Dichtelement nach einem der vorhergehenden Ansprüche, **dadurch gekennzeichnet, dass** das Federelement (3) an seinen Enden eine stärkere Krümmung als in den übrigen Bereichen aufweist.

7. Dichtelement nach einem der vorhergehenden Ansprüche, **dadurch gekennzeichnet, dass** das Federelement aus einem metallischen Werkstoff oder einem Kunststoff ist.

8. Dichtelement nach einem der vorhergehenden Ansprüche, **dadurch gekennzeichnet, dass** der Dichtring (2) im Querschnitt eine U-Form hat und über den Umfang verteilte Schlitze sowie einen radialen Spalt zur leichteren Aufdehnung des Dichtringes aufweist.

9. Dichtelement nach einem der vorhergehenden Ansprüche, **dadurch gekennzeichnet, dass** der Außendurchmesser des Dichtrings (2) in Einbaulage 20 mm - 200 mm, vorzugsweise 60 mm - 120 mm beträgt.

## Claims

1. Sealing element (1) with a spring element (3) and a sealing ring (2) with a take-up (5) for the spring element for supporting the sealing ring, **characterised in that** the spring element takes the form of an arc-shaped element arced substantially only in one spatial direction, which extends across a circumference area of more than 360° in the installed condition of the sealing ring (2).

2. Sealing element according to Claim 1, **characterised in that** the spring element (3) comprises a circular, rectangular, cross-shaped, or oval cross-section.

3. Sealing element according to one of the preceding Claims, **characterised in that** the spring element (3) comprises a diameter of 0.3 mm to 3 mm, preferably of 0.7 mm to 2 mm, if the same comprises a circular cross-section, and comprises corresponding cross-sectional surfaces for other wire cross-sections.

4. Sealing element according to one of the preceding Claims, **characterised in that** the spring element (3) extends across a circumference area of up to 450 degrees in the installed condition of the sealing ring (2).

5. Sealing element according to one of the preceding Claims, **characterised in that** the overlapping sections in an overlapping area of two sections of the spring element (3a, 3b; 3a', 3b') are positioned in relation to a cylinder wall (7) enclosing the sealing ring (2) at an equal distance (Fig. 3a), or are offset from each other (see Fig. 3b).

6. Sealing element according to one of the preceding Claims, **characterised in that** the spring element (3) comprises a more pronounced arcing at its ends than in the other areas.

7. Sealing element according to one of the preceding Claims, **characterised in that** the spring element consists of a metallic material or a plastic material.

8. Sealing element according to one of the preceding Claims, **characterised in that** the sealing ring (2) comprises a U-shape as its cross-section and slots distributed around its circumference as well as a radial gap for easier expansion of the sealing ring.

9. Sealing element according to one of the preceding Claims, **characterised in that** the outside diameter of the sealing ring (2) is 20 mm - 200 mm, preferably 60 mm - 120 mm, in its installed condition.

## Revendications

1. Elément d'étanchéité (1) avec un élément à ressort (3) et une bague d'étanchéité (2), avec un logement (5) pour l'élément à ressort pour l'appui de la bague d'étanchéité, **caractérisé en ce que** l'élément à ressort est conçu comme un élément sensiblement cintré, courbé dans une seule direction spatiale, qui s'étend au-dessus d'une zone circonférentielle de plus de 360° à l'état monté de la bague d'étanchéité (2).

2. Elément d'étanchéité selon la revendication 1, **caractérisé en ce que** l'élément à ressort (3) présente une section ronde, rectangulaire ou cruciforme ou ovale.

3. Elément d'étanchéité selon l'une quelconque des précédentes revendications, **caractérisé en ce que** l'élément à ressort (3) présente en cas de section ronde, un diamètre entre 0,3 mm et 3 mm, de préférence entre 0,7 mm et 2 mm, et en cas de sections de fil différentes, des surfaces de section correspondantes.

4. Elément d'étanchéité selon l'une quelconque des précédentes revendications, **caractérisé en ce que** l'élément à ressort (3) s'étend au-dessus d'une zone circonférentielle jusqu'à 450 degrés à l'état monté de la bague d'étanchéité (2).

5. Elément d'étanchéité selon l'une quelconque des précédentes revendications, **caractérisé en ce que** dans une zone de chevauchement de deux segments de l'élément à ressort (3a, 3b ; 3a', 3b'), les segments se chevauchant ont le même écart (voir fig. 3a) par rapport à une paroi de vérin (7) entourant la bague d'étanchéité (2) ou sont décalés l'un par rapport à l'autre (voir figure 3b).

6. Elément d'étanchéité selon l'une quelconque des précédentes revendications, **caractérisé en ce que** l'élément à ressort (3) présente à ses extrémités une courbure plus forte que dans ses autres zones.

7. Elément d'étanchéité selon l'une quelconque des précédentes revendications, **caractérisé en ce que** l'élément à ressort est constitué d'un matériau métallique ou plastique.

8. Elément d'étanchéité selon l'une quelconque des précédentes revendications, **caractérisé en ce que** la bague d'étanchéité (2) a une section en forme de U et présente des encoches réparties sur sa circonférence ainsi qu'un sillon radial pour faciliter la dilatation de la bague d'étanchéité.

9. Elément d'étanchéité selon l'une quelconque des précédentes revendications, **caractérisé en ce que** le diamètre extérieur de la bague d'étanchéité (2) mesure dans sa position de montage, 20 mm - 200 mm, de préférence 60 mm - 120 mm.
